# EUROPÄISCHE PATENTSCHRIFT

(11) **EP 4 079 123 B1**
(45) Veröffentlichungstag und Bekanntmachung des Hinweises auf die Patenterteilung: **28.02.2024**
(21) Anmeldenummer: 22163137.7
(22) Anmeldetag: 21.03.2022
(51) Int. Cl.: A01B 59/00, A01B 59/043, A01B 59/06

(54) **OBERLENKER FÜR EINEN DREIPUNKT-KRAFTHEBER EINES LANDWIRTSCHAFTLICHEN TRAKTORS**
UPPER LINK FOR A THREE POINT POWER LIFT OF AN AGRICULTURAL TRACTOR
BIELLE SUPÉRIEURE POUR UN RELEVAGE À TROIS POINTS D'UN TRACTEUR AGRICOLE

(30) Priorität: 14.04.2021 DE 102021109328
(43) Veröffentlichungstag der Anmeldung: 26.10.2022
(73) Patentinhaber: Deere & Company, Moline, IL 61265 (US)
(72) Erfinder: HEITLINGER, Martin, 68163 Mannheim (DE); SCHIBEL, Achim, 68163 Mannheim (DE)
(74) Vertreter: Dehnhardt, Florian Christopher

(56) Entgegenhaltungen:
- CA-A- 640 206
- DE-A1-102007 009 137
- DE-B- 1 287 348
- US-A- 4 222 583
- US-A- 4 778 194

## Beschreibung

Die Erfindung betrifft einen Oberlenker für einen Dreipunkt-Kraftheber eines landwirtschaftlichen Traktors, mit einer zylindrischen Verbindungshülse, in deren offenen Enden gegenläufige Innengewinde ausgebildet sind, wobei in jedem der beiden offenen Enden ein Befestigungselement mit einem mit dem Innengewinde korrespondierenden Außengewinde eingeschraubt ist, sodass sich die Länge des Oberlenkers durch Drehen der zylindrischen Verbindungshülse verändern lässt, wobei ein erstes der beiden Befestigungselemente traktorseitig anbringbar ist und ein zweites der beiden Befestigungselemente eine Kupplungseinrichtung zur Herstellung einer lösbaren Verbindung mit einem anbaugeräteseitigen Kupplungspunkt aufweist.

Ein derartiger längenveränderlicher Oberlenker für einen Dreipunkt-Kraftheber ist beispielsweise aus der DE 39 38 419 C bekannt. Da die Längenverstellung hier von Hand durchzuführen ist, wird dessen Bauart (in Abgrenzung zu den ebenfalls gebräuchlichen hydraulischen Oberlenkern) auch als "mechanisch" bezeichnet. Der Oberlenker ist Bestandteil eines herkömmlichen Dreipunkt-Krafthebers, der heckseitig an einem landwirtschaftlichen Traktor angebracht ist und neben dem Oberlenker des Weiteren erste und zweite Unterlenker umfasst, die sich mittels eines hydraulischen Hubwerks absenken bzw. anheben lassen. Sowohl an den Enden der Unterlenker wie auch des Oberlenkers befinden sich jeweilige Kupplungseinrichtungen, wobei diese üblicherweise als Kupplungshaken ausgestaltet sind, in die sich den anbaugeräteseitigen Kupplungspunkten zugeordnete Gegenstücke in Gestalt von Kupplungskugeln oder -bolzen lösbar einrasten lassen.

Ist an dem Dreipunkt-Kraftheber kein Anbaugerät angebracht oder werden zu dessen Betrieb lediglich die Unterlenker genutzt, was beispielsweise für überbreite und dementsprechend schwere Drillmaschinen zutrifft, ist der am landwirtschaftlichen Traktor angebrachte Oberlenker solange in einer vorgegebenen Transportposition zu verwahren. Eine gängige Maßnahme sieht vor, den Oberlenker nach oben zu schwenken und mittels eines Sicherungsbolzens in dieser Position innerhalb eines u-förmigen Aufnahmeblechs zu arretieren. Erschwerend ist hierbei, dass der Oberlenker beim Umstecken des Sicherungsbolzens gleichzeitig mit der freien Hand gehalten werden muss.

Eine unter Handhabungsgesichtspunkten weiterentwickelte Anordnung zur Verwendung mit einem hydraulischen Oberlenker wird insoweit in der DE 10 2007 009 137 A1 vorgeschlagen. Diese umfasst einen selbstverriegelnden Schnappverschluss, der in einen an einer Oberseite des hydraulischen Oberlenkers vorgesehenen Haltebügel einrastet und diesen solchermaßen in einer für den Transport vorgesehenen hochgeschwenkten Position hält.

Aus der CA 640 206 A ist ein Oberlenker gemäß dem Oberbegriff des Anspruchs 1 bekannt.

Angesichts dessen ist es Aufgabe der vorliegenden Erfindung, einen Oberlenker mechanischer Bauart anzugeben, der eine Verwendung eines selbstverriegelnden Schnappverschlusses oder eines vergleichbaren Mechanismus zur Arretierung des Oberlenkers in einer vorgegebenen Transportposition ermöglicht. Diese Aufgabe wird durch einen Oberlenker mit den Merkmalen des Patentanspruchs 1 gelöst.

Der Oberlenker für einen Dreipunkt-Kraftheber eines landwirtschaftlichen Traktors umfasst eine zylindrische Verbindungshülse, in deren offenen Enden gegenläufige Innengewinde ausgebildet sind, wobei in jedem der beiden offenen Enden ein Befestigungselement mit einem mit dem Innengewinde korrespondierenden Außengewinde eingeschraubt ist, sodass sich die Länge des Oberlenkers durch Drehen der zylindrischen Verbindungshülse verändern lässt, wobei ein erstes der beiden Befestigungselemente traktorseitig anbringbar ist und ein zweites der beiden Befestigungselemente eine Kupplungseinrichtung zur Herstellung einer lösbaren Verbindung mit einem anbaugeräteseitigen Kupplungspunkt aufweist. An dem ersten Befestigungselement ist ferner eine Haltestange angebracht, an der ein entlang der zylindrischen Verbindungshülse beabstandet verlaufenden Stangenabschnitt mit einem Verriegelungsbereich zur Aufnahme eines Halteriegels ausgebildet ist, wobei an einem offenen Abschnittsende ein Stützelement angebracht ist, das die zylindrische Verbindungshülse derart umgreift, dass diese darin drehverschiebbar gelagert ist.

Der Halteriegel kann in einem solchen Fall Bestandteil eines einfach zu bedienenden Schnappverschlusses sein, wie er aus der DE 10 2007 009 137 A1 hervorgeht. Es ist jedoch auch ein beliebiger anderer Mechanismus denkbar, der in der Lage ist, den Verriegelungsbereich an der Haltestange sicher in Eingriff zu nehmen, um den Oberlenker in seiner vorgegebenen Transportposition am landwirtschaftlichen Traktor zu arretieren. Das Stützelement trägt den in einem solchen Fall an der Haltestange gewichtsbedingt auftretenden Biegekräften Rechnung, indem sich deren offenes Abschnittsende an der zylindrischen Verbindungshülse abzustützen vermag, ohne die zur Längenverstellung erforderliche Drehbarkeit der zylindrischen Verbindungshülse zu behindern.

Vorteilhafte Ausgestaltungen des erfindungsgemäßen Oberlenkers gehen aus den Unteransprüchen hervor.

Um einen definierten Anlagebereich für den Halteriegel bereitzustellen, verläuft der Stangenabschnitt zumindest im Verriegelungsbereich gerade, insbesondere im Wesentlichen parallel zur zylindrischen Verbindungshülse. Im Sinne einer unaufwändigen Fertigung kann sich der gerade Stangenabschnitt auch ausgehend von einem an dem ersten Befestigungselement angebrachten bogenförmigen Übergangsstück durchgehend bis zu seinem offenen Abschnittsende erstrecken. Die Haltestange kann mittels des bogenförmigen Übergangsstücks an dem ersten Befestigungselement angeschweißt sein, wozu beide Teile aus Stahl bestehen. Genauer gesagt kann die Haltestange an einem an dem ersten Befestigungselement ausgebildeten Montageflansch befestigt sein, wobei der Montageflansch ein Befestigungsauge zur Aufnahme eines an dem landwirtschaftlichen Traktor anbringbaren Kugelgelenks umfasst, das ein Verschwenken des Oberlenkers in vertikaler und/oder horizontaler Richtung ermöglicht.

Des Weiteren besteht die Möglichkeit, dass das Stützelement die zylindrische Verbindungshülse rundum umgreift. Abgesehen von einem gewissen Lagerspiel, das zur Gewährleistung der freien Drehbarkeit der zylindrischen Verbindungshülse erforderlich ist, erfolgt die Ableitung von auf die Haltstange wirkenden Biegebelastungen in einem solchen Fall besonders gleichmäßig.

Zusätzlich kann sich zwischen der zylindrischen Verbindungshülse und dem Stützelement ein Gleitelement befinden, wobei das Gleitelement insbesondere an dem Stützelement angebracht ist. Bevorzugt umgibt das Gleitelement die Außenkontur der zylindrischen Verbindungshülse vollständig, wobei es sich beispielsweise um eine aus Kunststoff bestehende Lippe handelt, die an dem Stützelement aufgesteckt ist. Als Kunststoff kommt in diesem Fall eine Verwendung von Polyamid, PTFE oder dergleichen in Frage. Umgekehrt ist auch eine Ausbildung des Gleitelements an der zylindrischen Verbindungshülse denkbar, zum Beispiel als entlang der Außenkontur längsverlaufende Abstandsrippen, die einstückiger Bestandteil des zylindrischen Hülsenkörpers sind. Letzterer kann in einem solchen Fall als aus Stahl bestehendes Gussteil hergestellt sein.

Um ein ungewolltes Verstellen der Oberlenkerlänge zu unterbinden, kann an der zylindrischen Verbindungshülse ein Sicherungsbügel angebracht sein, der sich von Hand aus einer an dem Stützelement verrastbaren Arretierungsposition heraus in eine die Drehung der zylindrischen Verbindungshülse freigebende Betätigungsposition schwenken lässt. Der Sicherungsbügel bildet in seiner herausgeschwenkten Betätigungsposition zugleich einen Hebel, der ein Drehen der zylindrischen Verbindungshülse mit der Hand erleichtert.

Ein selbsttätiges Lösen des Sicherungshebels lässt sich zusätzlich behindern, indem der Sicherungsbügel in Richtung der Arretierungsposition vorgespannt ist. Der Sicherungsbügel kann hierzu aus einem u-förmig gebogenen Drahtbügel bestehen, dessen Enden derart exzentrisch versetzt in zugehörigen Lagerbohrungen eines an der zylindrischen Verbindungshülse vorgesehenen Vorsprungs aufgenommen sind, dass beim Herausschwenken aus der Arretierungsposition eine rückstellende Federspannung innerhalb des Drahtbügels aufgebaut wird.

Im einfachsten Fall umfasst das Stützelement zur Lagerung der zylindrischen Verbindungshülse eine Halteplatte mit einer kreisförmigen Aufnahmeöffnung, durch die die zylindrische Verbindungshülse hindurchgeführt ist. Die Halteplatte besteht typischerweise aus Stahlblech und kann an dem offenen Abschnittsende der Haltestange angenietet oder angeschweißt sein. Um den zur Verfügung stehenden Bauraum bestmöglich zu nutzen, weist die Halteplatte bevorzugt eine sich in Richtung der Haltestange verjüngende, dem Querschnitt des daran anzubringenden Abschnittsendes angepasste Außenkontur auf.

Zur Verrastung des Sicherungsbügels in der Arretierungsposition können entlang der Außenkontur der Halteplatte gegenüberliegende Rastnasen ausgeformt sein. Diese übergreifen den u-förmigen Drahtbügel derart von außen bzw. innen, dass diese die beiden Drahtschenkel beim Lösen des Sicherungsbügels federelastisch zusammen- bzw. auseinanderdrücken. Die dabei zu überwindende Gegenkraft führt zu einer verlässlichen Festlegung des Sicherungsbügels in der Arretierungsposition.

Auch ist es vorstellbar, dass entlang der kreisförmigen Aufnahmeöffnung ein Kantenschutz angebracht ist, der mögliche Beschädigungen der (lackierten) Oberfläche der darin geführten zylindrischen Verbindungshülse verhindert, sofern diese zum Zwecke der Längenverstellung des Oberlenkers mit der Hand gedreht wird. Der Kantenschutz kann zugleich die Funktion des vorstehend beschriebenen Gleitelements übernehmen und dementsprechend durch eine auf die Kante der Aufnahmeöffnung aufgesteckte umlaufende Kunststofflippe gebildet sein.

An dem ersten Befestigungselement kann zusätzlich ein Gewichtsentlastungsmittel vorgesehen sein, das an einer traktorseitigen Montagestelle befestigbar ist. Bei dem Gewichtsentlastungsmittel handelt es sich beispielsweise um eine Zugfeder, die mit einem ersten Ende an einer an dem ersten Befestigungselement angebrachten Befestigungslasche und mit einem zweiten Ende an der im Heckbereich des landwirtschaftlichen Traktors vorgesehenen Montagestelle angelenkt ist. Durch entsprechende Bemessung der Federkonstanten der Zugfeder lässt sich die Handhabung selbst verhältnismäßig schwerer Oberlenker merklich verbessern. Der grundsätzliche Aufbau eines derartigen Gewichtsentlastungsmittels ist beispielsweise in der DE 10 2007 019 128 A1 detailliert dargestellt.

Der erfindungsgemäße Oberlenker für einen Dreipunkt-Kraftheber eines landwirtschaftlichen Traktors wird im Folgenden anhand der beigefügten Zeichnungen näher erläutert. Hierbei beziehen sich identische Bezugszeichen auf übereinstimmende oder bezüglich ihrer Funktion vergleichbare Komponenten. Es zeigen:
- Fig. 1: ein Ausführungsbeispiel des erfindungsgemäßen Oberlenkers, und
- Fig. 2: ein mit dem in Fig. 1 wiedergegebenen Oberlenker ausgestatteter Dreipunkt-Kraftheber an einem landwirtschaftlichen Traktor.

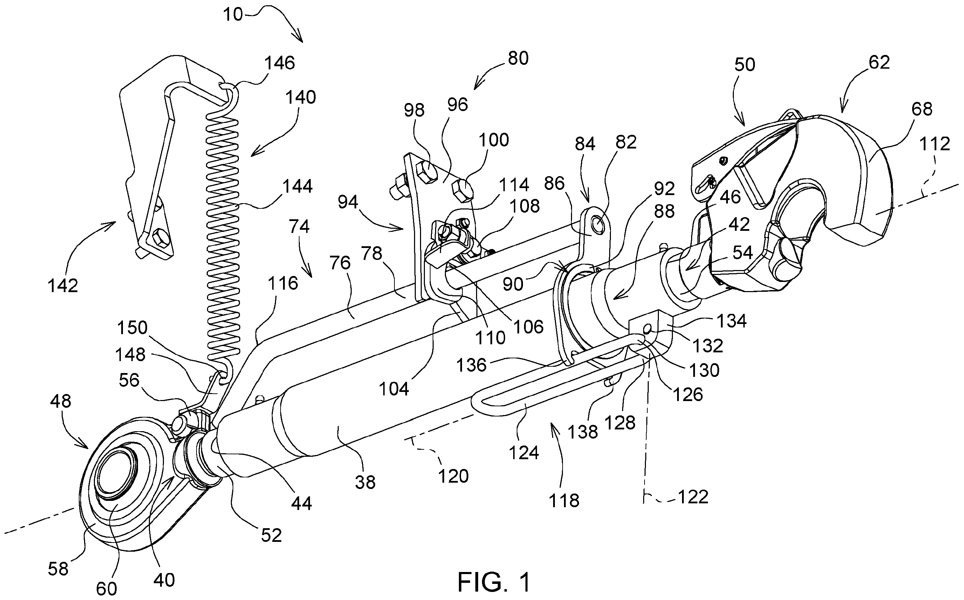

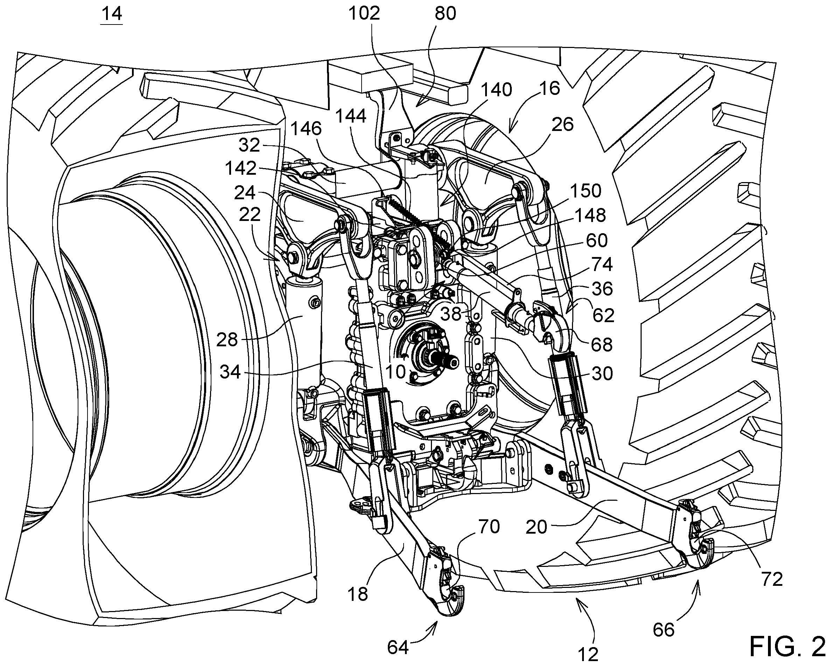

Fig. 1 zeigt ein Ausführungsbeispiel des erfindungsgemäßen Oberlenkers 10. Der Oberlenker 10 ist gemäß Fig. 2 Bestandteil eines Dreipunkt-Krafthebers 12 an einem landwirtschaftlichen Traktor 14.

Der im Heckbereich 16 des landwirtschaftlichen Traktors 14 befindliche Dreipunkt-Kraftheber 12 umfasst neben dem zentral angebrachten Oberlenker 10 des Weiteren erste und zweite Unterlenker 18, 20. Diese lassen sich mittels eines hydraulischen Hubwerks 22 unter anderem auf Veranlassung eines Bedieners absenken bzw. anheben. Hierzu weist das hydraulische Hubwerk 22 erste und zweite Hubarme 24, 26 auf, die mittels zugehöriger Hydraulikzylinder 28, 30 um eine gemeinsame Achse 32 schwenkbar sind, wobei die Schwenkbewegung mittels längenverstellbarer Hubstreben 34, 36 auf die Unterlenker 18, 20 synchron übertragbar ist.

Wie in Fig. 1 zu erkennen ist, umfasst der Oberlenker 10 eine zylindrische Verbindungshülse 38, in deren offenen Enden 40, 42 gegenläufige Innengewinde 44, 46 ausgebildet sind. In jedem der beiden offenen Enden 40, 42 ist ein erstes bzw. zweites Befestigungselement 48, 50 mit einem mit dem Innengewinde 44, 46 korrespondierenden Außengewinde 52, 54 eingeschraubt, sodass sich die Länge des Oberlenkers 10 durch Drehen der zylindrischen Verbindungshülse 38 verändern lässt. Das erste Befestigungselement 48 ist traktorseitig angebracht. An dem ersten Befestigungselement 48 ist ein Montageflansch 56 ausgebildet, der ein Befestigungsauge 58 zur Aufnahme eines an dem landwirtschaftlichen Traktor 14 anbringbaren Kugelgelenks 60 umfasst, das ein Verschwenken des Oberlenkers 10 in vertikaler und/oder horizontaler Richtung ermöglicht. Das zweite Befestigungselement 50 weist eine Kupplungseinrichtung 62 zur Herstellung einer lösbaren Verbindung mit einem anbaugeräteseitigen Kupplungspunkt auf.

An den Enden der Unterlenker 18, 20 befinden sich weitere Kupplungseinrichtungen 64, 66. Sowohl die Kupplungseinrichtung 62 des Oberlenkers 10 wie auch die beiden Kupplungseinrichtungen 64, 66 der Unterlenker 18, 20 sind vorliegend als Kupplungshaken 68, 70, 72 ausgestaltet, in die sich den anbaugeräteseitigen Kupplungspunkten zugeordnete Gegenstücke in Gestalt von Kupplungskugeln oder -bolzen lösbar einrasten lassen. Je nach Kategorie des Dreipunkt-Krafthebers 12 unterscheiden sich Dimensionierung und Lage der Kupplungskugeln oder -bolzen.

Da die Längenverstellung im Falle des Oberlenkers 10 von Hand durchzuführen ist, wird dessen Bauart (in Abgrenzung zu den ebenfalls gebräuchlichen hydraulischen Oberlenkern) auch als "mechanisch" bezeichnet.

An dem ersten Befestigungselement 48 ist eine Haltestange 74 angebracht, an der ein entlang der zylindrischen Verbindungshülse 38 beabstandet verlaufenden Stangenabschnitt 76 mit einem Verriegelungsbereich 78 zur Aufnahme eines Halteriegels 80 ausgebildet ist. Hierbei ist an einem offenen Abschnittsende 82 ein Stützelement 84 angebracht, das die zylindrische Verbindungshülse 38 derart umgreift, dass diese darin drehverschiebbar gelagert ist.

Beispielsgemäß umfasst das Stützelement 84 zur Lagerung der zylindrischen Verbindungshülse 38 eine Halteplatte 86 mit einer kreisförmigen Aufnahmeöffnung 88, durch die die zylindrische Verbindungshülse 38 hindurchgeführt ist. Die Halteplatte 86 besteht aus Stahlblech und ist an dem offenen Abschnittsende 82 der Haltestange 74 angenietet oder angeschweißt. Um den zur Verfügung stehenden Bauraum bestmöglich zu nutzen, weist die Halteplatte 86 eine sich in Richtung der Haltestange 74 verjüngende, dem Querschnitt des daran angebrachten Abschnittsendes 82 angepasste Außenkontur auf.

Zwischen der zylindrischen Verbindungshülse 38 und dem Stützelement 84 befindet sich ein Gleitelement 90, wobei das Gleitelement 90 gemäß Fig. 1 an dem Stützelement 84 angebracht ist. Das Gleitelement 90 bildet zugleich einen Kantenschutz, der mögliche Beschädigungen der (lackierten) Oberfläche der darin geführten zylindrischen Verbindungshülse 38 verhindert, sofern diese zum Zwecke der Längenverstellung des Oberlenkers 10 mit der Hand gedreht wird. Das Gleitelement 90 umgibt die Außenkontur der zylindrischen Verbindungshülse 38 vollständig, wobei es sich um eine aus Kunststoff bestehende Lippe 92 handelt, die an dem Stützelement 84 aufgesteckt ist. Als Kunststoff kommt eine Verwendung von Polyamid, PTFE oder dergleichen in Frage.

Der Innendurchmesser der in der Halteplatte 86 ausgebildeten Aufnahmeöffnung 88 einschließlich des Gleitelements 90 ist geringfügig größer bemessen als der Außendurchmesser des zylindrischen Hülsenkörpers, woraus sich ein gewisses Lagerspiel ergibt, das zur Gewährleistung der freien Drehbarkeit der zylindrischen Verbindungshülse 38 erforderlich ist.

Wie in Fig. 2 zu erkennen ist, befindet sich der Halteriegel 80 in einem Bereich oberhalb des Oberlenkers 10. Beispielsgemäß ist der Halteriegel 80 Bestandteil eines Schnappverschlusses 94, wie er in der DE 10 2007 009 137 A1 eingehend beschrieben ist. Der Schnappverschluss 94 umfasst eine Basisplatte 96, die mittels erster und zweiter Bolzen 98, 100 an einer im Heckbereich 16 des landwirtschaftlichen Traktors 14 vorgesehenen Konsole 102 horizontal angeschraubt ist. Ein daran ausgebildeter v-förmiger Führungsbereich 104 mündet in einen Aufnahmeschlitz 106, der eine dem Querschnitt des Verriegelungsbereichs 78 der Haltestange 74 entsprechende Innenkontur aufweist. Ein an der Basisplatte 96 mittels eines Bolzens 108 schwenkbar angebrachter Drehriegel 110 wird beim Hochschwenken des Oberlenkers 10 in Richtung einer vorgegebenen Transportposition 112 von der Haltestange 74 in eine den Aufnahmeschlitz 106 freigebende Position gedrängt, wobei der Drehriegel 110 unter der Wirkung einer rückstellenden Federkraft in seine Ruheposition zurückschnappt, sobald die Haltestange 74 vollständig in dem Aufnahmeschlitz 106 anliegt. Umgekehrt wird zum Lösen der Arretierung der Drehriegel 110 mittels eines daran angebrachten Betätigers 114 von Hand unter Freigabe der Haltestange 74 und damit des Oberlenkers 10 aus seiner Ruheposition herausgedreht.

Auf diese Weise lässt sich der Oberlenker 10 in der vorgegebenen Transportposition 112 verwahren, sofern dieser gerade nicht benötigt wird. Dies ist beispielsweise dann der Fall, wenn an dem Dreipunkt-Kraftheber 12 kein Anbaugerät angebracht ist oder zu dessen Betrieb lediglich die Unterlenker 18, 20 genutzt werden, was beispielsweise für überbreite und dementsprechend schwere Drillmaschinen zutrifft.

Um einen definierten Anlagebereich für den Halteriegel 80 bereitzustellen, verläuft der Stangenabschnitt 76 zumindest im Verriegelungsbereich 78 gerade, im Wesentlichen parallel zur zylindrischen Verbindungshülse 38 bzw. dem von dieser umfassten zylindrischen Hülsenkörper. Vorliegend erstreckt sich der gerade Stangenabschnitt 76 ausgehend von einem an dem ersten Befestigungselement 48 angebrachten bogenförmigen Übergangsstück 116 durchgehend bis zu seinem offenen Abschnittsende 82. Die Haltestange 74 ist mittels des bogenförmigen Übergangsstücks 116 an dem ersten Befestigungselement 48 bzw. dem daran ausgebildeten Montageflansch 56 angeschweißt, wozu beide Teile aus Stahl bestehen.

Das Stützelement 84 trägt den in einem solchen Fall an der Haltestange 74 gewichtsbedingt auftretenden Biegekräften Rechnung, indem sich deren offenes Abschnittsende 82 an der zylindrischen Verbindungshülse 38 abzustützen vermag, ohne die zur Längenverstellung erforderliche Drehbarkeit der zylindrischen Verbindungshülse 38 zu behindern.

Um ein ungewolltes Verstellen der Oberlenkerlänge zu unterbinden, ist an der zylindrischen Verbindungshülse 38 ein Sicherungsbügel 118 angebracht, der sich von Hand aus einer an dem Stützelement 84 verrastbaren Arretierungsposition 120 heraus in eine die Drehung der zylindrischen Verbindungshülse 38 freigebende Betätigungsposition 122 schwenken lässt. Der Sicherungsbügel 118 bildet in seiner herausgeschwenkten Betätigungsposition 122 zugleich einen Hebel, der ein Drehen der zylindrischen Verbindungshülse 38 mit der Hand erleichtert.

Der Sicherungsbügel 118 besteht hierzu aus einem u-förmig gebogenen Drahtbügel 124, dessen Enden 126, 128 derart exzentrisch versetzt in zugehörigen Lagerbohrungen 130, 132 eines an der zylindrischen Verbindungshülse 38 vorgesehenen Vorsprungs 134 aufgenommen sind, dass beim Herausschwenken aus der Arretierungsposition 120 eine rückstellende Federspannung innerhalb des Drahtbügels 124 aufgebaut wird. Auf diese Weise ist der Sicherungsbügel 118 in Richtung der Arretierungsposition 120 vorgespannt.

Zur Verrastung des Sicherungsbügels 118 in der Arretierungsposition 120 sind entlang der Außenkontur der Halteplatte 86 gegenüberliegende Rastnasen 136, 138 ausgeformt, die den u-förmigen Drahtbügel 124 derart von außen übergreifen, dass diese die beiden Drahtschenkel beim Lösen des Sicherungsbügels 118 federelastisch zusammendrücken. Die dabei zu überwindende Gegenkraft führt zu einer verlässlichen Festlegung des Sicherungsbügels 118 in der Arretierungsposition 120.

An dem ersten Befestigungselement 48 ist zusätzlich ein Gewichtsentlastungsmittel 140 vorgesehen, das an einer traktorseitigen Montagestelle 142 befestigt ist. Bei dem Gewichtsentlastungsmittel 140 handelt es sich um eine Zugfeder 144, die mit einem ersten Ende 146 an einer an dem ersten Befestigungselement 48 angebrachten Befestigungslasche 148 und mit einem zweiten Ende 150 an der im Heckbereich 16 des landwirtschaftlichen Traktors 14 vorgesehenen Montagestelle 142 angelenkt ist. Durch entsprechende Bemessung der Federkonstanten der Zugfeder 144 lässt sich die Handhabung selbst verhältnismäßig schwerer Oberlenker merklich verbessern. Der grundsätzliche Aufbau eines derartigen Gewichtsentlastungsmittels 140 ist in der DE 10 2007 019 128 A1 eingehend dargestellt.

## Patentansprüche

1. Oberlenker für einen Dreipunkt-Kraftheber eines landwirtschaftlichen Traktors, mit einer zylindrischen Verbindungshülse (38), in deren offenen Enden (40, 42) gegenläufige Innengewinde (44, 46) ausgebildet sind, wobei in jedem der beiden offenen Enden (40, 42) ein Befestigungselement (48, 50) mit einem mit dem Innengewinde (44, 46) korrespondierenden Außengewinde (52, 54) eingeschraubt ist, sodass sich die Länge des Oberlenkers (10) durch Drehen der zylindrischen Verbindungshülse (38) verändern lässt, wobei ein erstes der beiden Befestigungselemente (48) traktorseitig anbringbar ist und ein zweites der beiden Befestigungselemente (50) eine Kupplungseinrichtung (62) zur Herstellung einer lösbaren Verbindung mit einem anbaugeräteseitigen Kupplungspunkt aufweist, wobei an dem ersten Befestigungselement (48) eine Haltestange (74) angebracht ist, an der ein entlang der zylindrischen Verbindungshülse (38) beabstandet verlaufender Stangenabschnitt (76) mit einem Verriegelungsbereich (78) zur Aufnahme eines Halteriegels (80) ausgebildet ist, **dadurch gekennzeichnet, dass** an einem offenen Abschnittsende (82) ein Stützelement (84) angebracht ist, das die zylindrische Verbindungshülse (38) derart umgreift, dass diese darin drehverschiebbar gelagert ist.

2. Oberlenker nach Anspruch 1, **dadurch gekennzeichnet, dass** der Stangenabschnitt (76) zumindest im Verriegelungsbereich (78) gerade verläuft.

3. Oberlenker nach Anspruch 1 oder 2, **dadurch gekennzeichnet, dass** das Stützelement (84) die zylindrische Verbindungshülse (38) rundum umgreift.

4. Oberlenker nach wenigstens einem der vorhergehenden Ansprüche, **dadurch gekennzeichnet, dass** sich zwischen der zylindrischen Verbindungshülse (38) und dem Stützelement (84) ein Gleitelement (90) befindet, wobei das Gleitelement (90) insbesondere an dem Stützelement (84) angebracht ist.

5. Oberlenker nach wenigstens einem der vorhergehenden Ansprüche, **dadurch gekennzeichnet, dass** an der zylindrischen Verbindungshülse (38) ein Sicherungsbügel (118) angebracht ist, der sich von Hand aus einer an dem Stützelement (84) verrastbaren Arretierungsposition (120) heraus in eine die Drehung der zylindrischen Verbindungshülse (38) freigebende Betätigungsposition (122) schwenken lässt.

6. Oberlenker nach Anspruch 5, **dadurch gekennzeichnet, dass** der Sicherungsbügel (118) in Richtung der Arretierungsposition (120) vorgespannt ist.

7. Oberlenker nach wenigstens einem der vorhergehenden Ansprüche, **dadurch gekennzeichnet, dass** das Stützelement (84) zur Lagerung der zylindrischen Verbindungshülse (38) eine Halteplatte (86) mit einer kreisförmigen Aufnahmeöffnung (88) umfasst, durch die die zylindrische Verbindungshülse (38) hindurchgeführt ist.

8. Oberlenker nach den Ansprüchen 6 und 7, **dadurch gekennzeichnet, dass** zur Verrastung des Sicherungsbügels (118) in der Arretierungsposition (120) entlang der Außenkontur der Halteplatte (86) gegenüberliegende Rastnasen (136, 138) ausgeformt sind.

9. Oberlenker nach Anspruch 7 oder 8, **dadurch gekennzeichnet, dass** entlang der kreisförmigen Aufnahmeöffnung (88) ein Kantenschutz (90) angebracht ist.

10. Oberlenker nach wenigstens einem der vorhergehenden Ansprüche, **dadurch gekennzeichnet, dass** an dem ersten Befestigungselement (48) zusätzlich ein Gewichtsentlastungsmittel (140) vorgesehen ist, das an einer traktorseitigen Montagestelle (142) befestigbar ist.

## Claims

1. Upper link for a three-point power lift of an agricultural tractor, comprising a cylindrical connecting sleeve (38), opposing internal threads (44, 46) being configured in the open ends (40, 42) thereof, wherein a fastening element (48, 50) with an external thread (52, 54) corresponding to the internal thread (44, 46) is screwed into each of the two open ends (40, 42), such that the length of the upper link (10) may be varied by rotating the cylindrical connecting sleeve (38), wherein a first of the two fastening elements (48) may be attached on the tractor side and a second of the two fastening elements (50) has a coupling apparatus (62) for producing a releasable connection to a coupling point on the attachment side, wherein a retaining bar (74) is attached to the first fastening element (48), a bar portion (76) with a locking region (78) for receiving a retaining catch (80) and running spaced apart along the cylindrical connecting sleeve (38) being configured thereon, **characterized in that** a support element (84) is attached to an open portion end (82), said support element encompassing the cylindrical connecting sleeve (38) such that said connecting sleeve is borne so as to be rotationally displaceable therein.

2. Upper link according to Claim 1, **characterized in that** the bar portion (76) runs in a linear manner at least in the locking region (78).

3. Upper link according to Claim 1 or 2, **characterized in that** the support element (84) encompasses the cylindrical connecting sleeve (38) all around.

4. Upper link according to at least one of the preceding claims, **characterized in that** a sliding element (90) is located between the cylindrical connecting sleeve (38) and the support element (84), wherein the sliding element (90) is attached, in particular, to the support element (84).

5. Upper link according to at least one of the preceding claims, **characterized in that** a securing clip (118) is attached to the cylindrical connecting sleeve (38), said securing clip being able to be pivoted by hand from a blocking position (120) which may be latched to the support element (84) into an actuating position (122) releasing the rotation of the cylindrical connecting sleeve (38).

6. Upper link according to Claim 5, **characterized in that** the securing clip (118) is pretensioned in the direction of the blocking position (120).

7. Upper link according to at least one of the preceding claims, **characterized in that** for bearing the cylindrical connecting sleeve (38) the support element (84) comprises a retaining plate (86) with a circular receiving opening (88) through which the cylindrical connecting sleeve (38) is guided.

8. Upper link according to Claims 6 and 7, **characterized in that** for latching the securing clip (118) in the blocking position (120), opposing latching lugs (136, 138) are formed along the outer contour of the retaining plate (86).

9. Upper link according to Claim 7 or 8, **characterized in that** an edge protector (90) is attached along the circular receiving opening (88).

10. Upper link according to at least one of the preceding claims, **characterized in that** a weight relieving means (140), which may be fastened to a mounting point (142) on the tractor side, is additionally provided on the first fastening element (48).

## Revendications

1. Bielle supérieure pour un relevage à trois points d'un tracteur agricole, avec une douille de liaison cylindrique (38) dans les extrémités ouvertes (40, 42) de laquelle sont réalisés des filetages intérieurs contrarotatifs (44, 46), un élément de fixation (48, 50) avec un filetage extérieur (52, 54) correspondant au filetage intérieur (44, 46) étant vissé dans chacune des deux extrémités ouvertes (40, 42), de telle sorte que la longueur de la bielle supérieure (10) peut être modifiée en faisant tourner la douille de liaison cylindrique (38), un premier des deux éléments de fixation (48) pouvant être placé du côté du tracteur et un deuxième des deux éléments de fixation (50) présentant un dispositif d'accouplement (62) pour établir une liaison amovible avec un point d'accouplement du côté de l'outil porté, une tige de retenue (74) étant placée sur le premier élément de fixation (48), sur laquelle est réalisée une section de tige (76) s'étendant à distance le long de la douille de liaison cylindrique (38), avec une zone de verrouillage (78) pour recevoir un verrou de retenue (80), **caractérisée en ce qu'**à une extrémité de section ouverte (82) est placé un élément d'appui (84) qui entoure la douille de liaison cylindrique (38) de telle sorte que celle-ci y est montée de manière à pouvoir coulisser en rotation.

2. Bielle supérieure selon la revendication 1, **caractérisée en ce que** la section de tige (76) s'étend en ligne droite au moins dans la zone de verrouillage (78) .

3. Bielle supérieure selon la revendication 1 ou 2, **caractérisé en ce que** l'élément d'appui (84) entoure la douille de liaison cylindrique (38) sur tout son pourtour.

4. Bielle supérieure selon au moins l'une quelconque des revendications précédentes, **caractérisée en ce qu'**un élément coulissant (90) se trouve entre la douille de liaison cylindrique (38) et l'élément d'appui (84), l'élément coulissant (90) étant notamment placé sur l'élément d'appui (84).

5. Bielle supérieure selon au moins l'une quelconque des revendications précédentes, **caractérisée en ce qu'**un étrier de sécurité (118) est placé sur la douille de liaison cylindrique (38), lequel peut être pivoté manuellement d'une position de blocage (120) pouvant être encliquetée sur l'élément d'appui (84) dans une position d'actionnement (122) libérant la rotation de la douille de liaison cylindrique (38).

6. Bielle supérieure selon la revendication 5, **caractérisée en ce que** l'étrier de sécurité (118) est précontraint en direction de la position de blocage (120) .

7. Bielle supérieure selon au moins l'une quelconque des revendications précédentes, **caractérisée en ce que** l'élément d'appui (84) destiné à supporter la douille de liaison cylindrique (38) comprend une plaque de retenue (86) avec une ouverture de réception circulaire (88) à travers laquelle la douille de liaison cylindrique (38) est guidée.

8. Bielle supérieure selon les revendications 6 et 7, **caractérisée en ce que** des ergots d'encliquetage (136, 138) opposés sont formés le long du contour extérieur de la plaque de retenue (86) pour encliqueter l'étrier de sécurité (118) dans la position de blocage (120).

9. Bielle supérieure selon la revendication 7 ou 8, **caractérisée en ce qu'**une protection d'arête (90) est placée le long de l'ouverture de réception circulaire (88) .

10. Bielle supérieure selon au moins l'une quelconque des revendications précédentes, **caractérisé en ce qu'**il est prévu en outre sur le premier élément de fixation (48) un moyen de délestage (140) qui peut être fixé à un emplacement de montage (142) du côté du tracteur.
